# EUROPEAN PATENT SPECIFICATION

(11) **EP 3 490 384 B1**
(45) Date of publication and mention of the grant of the patent: **09.08.2023**
(21) Application number: 17833617.8
(22) Date of filing: 08.05.2017
(51) Int. Cl.: A22C 25/16

(54) **PIN BONE REMOVAL APPARATUS**
NADELKNOCHENENTFERNUNGSVORRICHTUNG
APPAREIL DE RETRAIT D'ARÊTE INTRAMUSCULAIRE

(30) Priority: 29.07.2016 DK 201600456; 16.08.2016 DK 201670625
(43) Date of publication of application: 05.06.2019
(73) Proprietor: Pescatech ApS, 6700 Esbjerg (DK)
(72) Inventor: BJERREGAARD, Chris, 6715 Esbjerg N (DK); CHRISTENSEN, Thorkild Ellekrog, 9380 Vestbjerg (DK); PETERSEN, Poul, 8500 Grenaa (DK)
(74) Representative: Kanved, Nicolai
(86) International application number: PCT/DK2017/050147
(87) International publication number: WO 2018/019343

(56) References cited:
- EP-A1- 1 284 604
- EP-A1- 2 531 038
- WO-A1-01/43553
- WO-A1-98/18335
- WO-A2-2016/008926
- DE-B3-102015 111 448
- GB-A- 1 513 243
- JP-A- 2002 238 445
- JP-A- 2014 014 346
- US-B1- 6 280 313
- US-B2- 7 247 086

## Description

### Field of the Invention

The present invention relates to a pin bone removal apparatus, for removing pin bones in fish flesh, where the pin bone removal apparatus comprises at least a conveyor and a pin bone removal unit.

### Background of the Invention

Removal of the pin bones is a critical part of processing fresh fish. Conventional pin bone removers cannot cope with the line speed set by today's filleting machines unless the fillets are divided into 6 lanes. This set-up takes up considerable space in length and width in production facilities. In addition, conventional methods have over numerous attempts proven to be unsuccessful on especially fresh fish fillets and yet not achieved noticeable success on pre-rigor filets no matter the specie. This invention, will change, set new standards and become a new generation of intelligent and modernized pin bone removal machines in its own flexibility or with temperature manipulation in front which succeed in pre-rigor pin bone removal.

Before the development of the present invention, it has been known to remove pin bones in the following ways:
1) Manually, where operators have small tools to pick the bones from the flesh,
2) Semi-automatic, where a handheld rotating shredded drum is positioned to rip the bones from the flesh,
3) Automatic, where a conveyor takes the fish through one or more fixed rotating drums,
4) Automatic as 3), but where fillets have to be divided from 2 to 6 lanes due to the line speed, and merged again from 6 lines to 2 lines.

The speed of today's filleting machine calls for 6 lanes, which takes up a lot of space in length and width, which also is expensive, not easy to maintain or clean. In addition, the above methods have also not worked properly on fresh (pre-rigor) fish fillets, where the firm flesh and bone fastens to the skin make this impossible without damaging the flesh.

The main reason the above methods have not worked properly is the fixed rollers in fixed angles, where all fillets shall pass through in a fixed pace to optimize the picking of bones.

Examples of prior art technologies are discussed briefly below.

WO2016/08926 A discloses a pin bone removal system adapted to automatically removing a pin bone area of a fish fillet when conveyed by a conveyor after undergoing a cutting process. Initially, the pin bone area has been cut from the remaining part of the fish fillet in a preceding step, but is not yet separated from the remainder of the fillet. The transversal position of the fish fillet in relation to the first end is adjusted such that when the fish fillet arrives at the downstream position the position of the cut pin bone area is such that the cut pin bone area falls through the space while the remaining part of the fish fillet remains on the first and/or second conveyor belts.

EP 2531038 B discloses a food processing apparatus adapted for detecting and cutting tough tissues, e.g. bones, from food items in order to remove tough tissues from food item pieces and thus increase the cutting yield. The food items may e.g. be fish fillets. A tough tissue detection means, e.g. an X-ray machine, is used for imaging incoming food items and based on the imaging generating first image data indicating the location of the tough tissues in said food items. A control unit operates a cutting means based on the first image data so as to cut portions of said incoming food items containing the tough items/bones. A second image data, e.g. 2D or 3D images, may be used for calculating weight, volume, thickness and/or colour of the food item.

WO 2013/132068 A discloses a cutting apparatus for cutting food items, in particular for cutting pin bone areas from fish fillets. The food item conveyed on a conveyor and a cutter is arranged above a gap extending across the at least one conveyor belt. The cutter is positioned in relation to the gap such that the cutting path of the cutter extends through the food items and the gap. The cutter is adapted to be connected to a control mechanism for operating crosswise movement of the cutter along the gap and thus controls the back and forth movement of the cutter parallel to the conveying direction. In order to enhance cutting accuracy and reduce errors when the food item is transferred between conveyors, the cutter may contain an X-ray unit that detects the items, e.g. bones that are to be cut from the food item.

EP 2337456 B discloses a method for extracting pin bones from a fillet wherein the pin bones are extracted by means of a tool having a certain speed relative to the fillet. The tool is displaced at a first relative speed along a first fillet portion where the fillet has pin bones and at a second (faster) relative speed along a second fillet portion where the fillet has no pin bones.

EP 1284604 A1 discloses a method for removing pin bones from the fish meat parts before resolution of rigor. The method comprises detecting the position of the pin bones in the fish, e.g.by image analysis, fluorescence techniques, near infrared spectroscopy, (NIR) or Infrared spectroscopy (IR). The pin bones can be separated from the fish part by conventional methods, e.g. dragging or pulling the row of pin bones from the fish meat and thereby only removing a minimum of fish meat with the pin bones.

EP 2531038 A1 discloses a system adapted to cut pin bones fully automatically from pre-rigor salmon fillets or white fish fillets. The system comprises conveyers, detection means, i.e. an X-ray machine, which captures an image of the fillet as well as the precise location of the bones in the fillet, a vision unit used to capture one or more of the following; silhouette image, full colour image and full 3D scan image and a cutting unit, e.g. on a robotic arm.

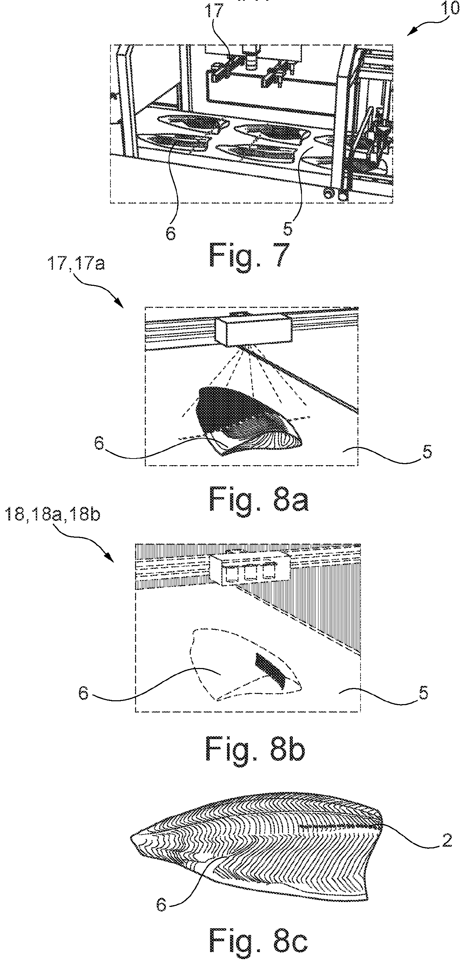

US 7247086 B2 discloses an apparatus and a procedure for pin boning fish. The apparatus comprises a conveyor, a housing comprising a pin boning device, which can be based in roller and edging, discs or forceps, moved by an arm, where the arm can be controlled by a robotic system. Fig. 7c shows four flexible pull mechanism arranged next to each other.

WO 99/52375 A discloses method and apparatus for removing bones from meat, such as pin-bones from fish fillets especially from whitefish, such as cod. The apparatus comprises a conveyor for transporting the meat and a bone removing unit for removing the bones as the meat is transported along the conveyor. The bone removing unit is movably hinged to the frame of the apparatus and moveable in an approximated up- and downward direction toward the conveyor. The conveyor comprises an upwardly extending edge allowing the bone removal unit to be brought into contact with a particular area to remove the bones. In this manner it is possible to adjust the apparatus according to each individual fish fillet.

WO 01/43553 A1 discloses methods and apparatus for removing bones from meat, such as pin bones from fish filets. The apparatus comprises a conveyor for advancing the filets along and a bone removing unit for picking unwanted bones from a particular area of the meat as it is transported along the conveyor. The bone removing unit is hinged to a frame via two individually movable arms, and comprises two main parts, a rotatable driven axel and a counter pressure element and optional a first pressure element.

GB 1513243 A discloses a method for filleting fish and removing pin bones while these are attached to the skeleton and prior to filleting of the fish. The system is using heat, such as steam, in a local treatment to the fish skin along a zone, usually a narrow strip where the pin bones are connected to the fish skin, thereby weakening or destroying the skin connection.

US 6280313 B1 discloses a catfish fillet machine comprising one or more nozzles that can be used to provide a water spray to cleanse the cutter from any remaining fin and bone debris such that the cutter is self-cleaning between each filleting of fish.

DE102015111448 discloses device comprising clamping jaws, where the clamping jaws are designed and arranged so that they can be moved toward and away from each other, and a drive is designed and arranged to exert an oscillating rotational movement of the base body about an axis of rotation and thereby of the clamping jaws about the center axis M.

JP 2014 014346 A discloses a method of pin bone removal where the fillets come to a complete stop during each operation step. Additionally, fillets are fixed and located in trays which does not make it possible to operate the system in motion.

### Object of the Invention

The object of this invention is to provide a pin bone removal apparatus of the type mentioned in the introduction which changes the prior art methods by adding both intelligence and individuality to the process.

It is further objects of the invention to:
a. make it possible for an intelligent pin bone removal apparatus to comprise a scanner for filet and bone positioning,
b. adapt full flexible rollers (pin bone heads), which can adjust to each filet,
c. let filet pass under and to follow the filet while operating.

It is also an object of the invention to make it possible for an intelligent pin bone removal apparatus to comprise apparatus for temperature manipulation in front of the pin bone removal apparatus or built together with the pin bone removal apparatus, where the temperature manipulation apparatus works:
a. By means of microwaves and/or
b. By means of infrared and/or
c. By means of laser technology.
and where the temperature manipulation apparatus works:
d. In front of the pin bone removal apparatus as an individual machine or
e. In between the scanner and the pin bone remover or
f. With its own scanner e.g. laser unit.

In yet another object of the invention it is furthermore possible to add cold air during process of fillets, so the temperature outside the apparatus can be higher without damaging the sensible fillet products.

It is an object of the invention to significantly improve today's fillet and further value added products.

It is thus objects of the invention to be able to:
1) Pick bones better and more efficient and reduce yield loss
2) Minimize space for the apparatus
3) Minimize the cost of the apparatus
4) Make the apparatus smaller and provide better cleaning etc.

### Description of the Invention

The present invention relates to a pin bone removal apparatus for removing pin bones in fish flesh according to independent claim 1. The pin bone removal apparatus comprises at least a conveyor and a pin bone removal unit, where the pin bone removal apparatus further comprises at least one scanner in front of the pin bone removal unit, and where the scanner comprises at least a positioning unit and a bone detection unit.

A simple position and/or surface scanner can also control position of pin bone rollers. So any kind of scanner or sensor (electrical or mechanical) used to position and thereafter control roller position to individual fillet + MR scanner type.

This makes it possible to provide a pin bone removal apparatus with intelligence and individuality. The fillets will pass through the scanner, which is able to measure the individual fillets as they pass through.

This makes it further possible to follow a procedure, where:
1. The scanner conduct a position, surface and bone detection by combining scanning methods
2. The pin bone removal unit adjust to the individual fillets.

When using the scanner, the fillets are then detected in terms of their location on the conveyor and the bones detected.

The pin bone removal apparatus could be two individual machines, but functions could be within one machine frame as well.

This makes it possible to:
1) take up considerably less space
2) enclose the apparatus in one cabinet and to adapt to each individual fillet
3) pass the fillet much faster through the pin bone removal apparatus whether they come head or tail first.

According to the invention, the pin bone removal unit comprises at least two flexible pull mechanisms arranged on at least one arm, where the at least one arm has a number of flexibly positioning means, which can react on the individual fillets in motion.

This makes it possible after scanning the pin bone removers (heads) to adapt to each individual fillet:
a. The position of the individual fish and its bones, where the surface structure is tracked through to the pulling area
b. Heads placed in length can for example take every second filet and let every second pass without pulling
c. The rotating drums have servo motors and have full arm wrist flexibility
d. Heads can follow the filet and extend pulling time and/or time for filet passing rotating drum/rollers
e. Each fillet is unique and the pull mechanism adapts all angles, speed accordingly, which will secure "straight" pulling from optimized angles
f. Unique belt lift is placed to lift front of filet to expose first 2-3 bones in collar areas.

The pin bones are exposed from the vertebra after filleting but piece of cartilage fastens this to the skin.

By the expression a number of positioning means is meant at least one of a linear movement of the arm, a rotating movement around the axes of the arm or around a swivel at the end of the arm where the axis of the swivel is at least parallel to the axis of the arm. It could likewise be a rotating movement around a swivel at the end of the arm where the axis of the swivel is different from parallel to the axis of the arm, preferably perpendicular to the axis of the arm.

Preferably telescopic coaxial axes are used as well as swivels, however other construction means could just as well be used to conduct the same kind of movements.

This makes it possible to pull the bones out with complete flexibility and adapted to each individual fillet:
a. Up / Down
b. All vertical and horizontal angles
c. Change in the longitudinal direction with / against the belt direction.

According to the invention, the at least two flexible pull mechanisms are arranged next to and/or in succession of each other, which can react to individual fillets in motion.

According to the invention, each pull mechanism comprises at least one rotating head.

This makes it possible to remove pin bones through flexible and manoeuvrable rotator heads adjusted to the individual fillets.

According to the invention, the rotating head is a rotating drum, which is intended to roll over the fillets where the pin bones are placed.

After the tendering process, the bones have lost their grip and can then be pulled with less or no damage to the flesh. In order to improve the result, intelligent pin bone pulling is used, where:
a. The position of individual fish and its bones as well as its surface structure is tracked through to the pulling area,
b. The rotating drums have servo motors and have full arm wrist flexibility, so that the rotator drum optimizes the picking angle,
c. Each fillet is unique and the pull mechanism adapts all angles, speed accordingly, which will secure "straight" pulling from optimized angles.

The pin bones are exposed from the vertebra after filleting but piece of cartilage fastens this to the skin.

According to the invention, the rotating drums have a number of flexible positioning means.

By the expression a number of positioning means is meant at least one of being adjustable in vertical angle, being adjustable in 360 degrees or being able to run in both directions (clockwise and anticlockwise looking from the centre of rotation) and with variable speed.

This makes it possible for the rotating drum to rotate in either direction, clockwise as well as anticlockwise, whichever direction is needed or wanted.

This makes it further possible with the flexibly positioning means of the arm to shift the roller/rotating drum in the longitudinal direction of the fillet and thus extending the contact with the fillet, thus acting against the high speed of the conveyor.

That means that the fillet is then able to pass the rotating drum/roller slower as the rotating drum/roller follow the fillet in the same direction. If the fillet came with the tail first, then the first roller would have to move faster than the belt and the rotating drum/roller would have to drive in the opposite direction. In a preferred embodiment, the pin bone removal apparatus has at least four rotating drums/rollers where the rollers are arranged two and two in parallel and two and two after each other.

In an embodiment of the invention, the positioning unit is a 3D surface scan unit and the bone detection unit is an x-ray unit.

This makes it possible to measure the individual fillets as they pass through the scanner by means of a 3D surface scan unit to detect the shape of the fillets and an x-ray unit to detect inside bone position and the angle of the bones within the fillets.

In another embodiment of the invention, the positioning unit is a 3D surface scan unit and the bone detection unit is a MR- scanning unit.

This makes it possible to measure the individual fillets as they pass through the scanner by means of a 3D surface scan unit to detect the shape of the fillets and an MR-scanning unit to detect inside bone position and the angle of the bones within the fillets.

In an embodiment of the invention, the pin bone removal unit further comprises at least one temperature manipulation unit configured to conduct a controlled heating of at least one selective area of the fish flesh and where the controlled temperature manipulation unit comprises either a microwave unit, an infrared unit or a laser unit.

This makes it possible to target the temperature manipulation to the process and to make it possible to provide a pin bone removal apparatus which is able to bring the processing window from present up to 3 days maturing down to no maturing needed.

It also makes it possible to finish the products as close to live state as possible, which includes pin bone removal and skinning.

When using the scanner, the fillets are then detected in terms of their location on the conveyor and the bones detected, where after tendering process is activated. This is done by manipulating the temperature through targeted heating of bone roots, where especially the bones are fastened.

This can also be done by letting the fillets pass through an infrared unit, where infrared technology makes it possible by using the information from the scanner to heat up specific area and depth according to the fillets surface.

This can also be done by letting the fillets pass through a laser unit, where laser technology makes it possible by using the information from the scanner to heat up specific area and depth according to the fillets surface with laser precision.

This can be done by letting the fillets pass through a controlled microwave chamber either in step or in a flow. The flesh will heat up the fastest, where the fat layer is thick, and bones are fastened to the skin. The temperature control ensures that it will only allow the area to tender and not the fillet to cook.

The temperature manipulation unit is preferably followed by the pin bone removal unit which could further be followed by a skinning machine or alternatively could a skinning machine follow after the temperature manipulation unit and before the pin bone removal unit. Both options are possible due to the fact that the skinning process becomes easier after the temperature manipulation unit.

Where a microwave tunnel is the temperature manipulation unit, the following procedure is also possible:
1. The temperature manipulation unit conduct a tendering process through targeted heating of bone roots,
2. The scanner conducts a position and bone detection by combining scanning methods, and
3. The pin bone removal unit adjust to the individual fillets.

The latter is due to the fact that the microwave unit also is able to operate without the scanner.

The process can be summarized as a two-step procedure, but not limited to:
1) Positioning and bone detection by combining scanning methods
2) Pin bone removal through flexible and manoeuvrable rotating drums adjusted to individual filets.

This can be done by letting the fillets pass through a controlled microwave tunnel either in step or in a flow. The flesh will heat up the fastest, where the fat layer is thick, and bones are fastened to the skin. The temperature control ensures that it will only allow the area to tender and not the fillet to cook, hence a controlled heating of at least one selective area of the fish.

With laser technology, it is also possible to heat up the flesh, where the fat layer is thick and bones are fastened to the skin area, thus a controlled heating of at least one selective area.

The pin bone removal apparatus comprising a temperature manipulation unit as explained would be a pre-rigor and fresh fish pin bone removal apparatus.

By a pre-rigor and fresh fish pin bone removal apparatus is meant a single unit machine or a combination of units working together one after another in a line, thus in-line. The conveyor is preferably a single conveyor that transports the fish through the entire pre-rigor and fresh fish pin bone apparatus such that the fish do not change its position between the units of the pre-rigor and fresh fish pin bone apparatus. Alternatively, it could be a number of conveyors as long as the fish do not change its position.

The conveyor is able to move the fillets forward in a flow, where it is understood that a flow is both considered to be controllable steps or forward continuous movement, where the fillets are in motion at both steps/movement.

The temperature manipulation unit is able to work from any side of the fish, whether that may be from above, below, front, back or from the sides. Furthermore, is it able to work from at least one angle, where it by angle is meant angle in relation to the surface of the fish.

For the pre-rigor and fresh fish pin bone removal apparatus to be able to work at all it is preferably driven by electricity.

In an embodiment of the invention, the pin bone removal apparatus comprises a laser unit, where at least the laser unit further comprises a laser tool arranged at a robotic arm.

This makes it possible to precisely pinpoint the position, distance and angle of the laser in relation to the fillet. In a preferred embodiment is the robotic arm part of a flex picker robot. In an alternative embodiment another type of robot could be used. It is also possible to have the laser perform a certain system of movements, whether that is in a tilted angle, zigzag, from side to side or other patterns or movements.

In a preferred embodiment, servo motors as rotary or linear actuators are used due to their ability to conduct precise control of positions, angularly or linearly. Servo motors also have the ability to control velocity as well as acceleration.

In an embodiment of the invention, the pin bone removal apparatus comprises a cabinet with self-cleaning means.

This makes it possible to conduct a completely automatized inside cleaning of a single unit machine or the combination of several or all the individual machines connected and working together, where the machines comprise cabinets.

The uniqueness continues as a solution, where movable and fixed spray bars combined with a sloped bottom section is making it possible to make a complete internal wash down, which include a 360 degrees belt and cabinet wash.

In an embodiment of the invention, the automated inside cleaning cabinets comprise moveable and/or fixed spray bars.

This makes it possible to choose the most optimal solution, whether that is moveable or fixed spray bars. It also makes it possible to choose a combination of movable or fixed spray bars. One cabinet might require one solution, another cabinet another. Though preferably, all cabinets comprise the same solution.

In an embodiment of the invention, the automated inside cleaning cabinets further comprise a sloped bottom section.

This makes it possible to get the water and other liquids used for cleaning out of the cabinets. In one embodiment, the bottom is sloped to one end of the cabinet, in another embodiment to the other end or in a third embodiment at the bottom centre of the cabinet.

The invention could be a single unit machine or a combination from two or more individual machines working together. The machine frames and cabinets are made to connect with each other and allow for completely automatized inside cleaning. Movable and fixed spray bars combined with a sloped bottom section is making it possible to make a complete internal wash down.

The invention also includes or at least could include a system for control- and regulating the apparatus comprising different technical items, such as for example microprocessors, sensors, timers, motors and actuators, which are not all described in the specification, but as one of ordinary skill will recognize necessary to the invention, to make it function properly.

The present invention further relates to the use of a pin bone removal apparatus as disclosed above for removing pin bones in fillets of salmon, according to independent claim 11.

### Description of the Drawing

The invention will be described in further detail below by means of non-limiting embodiments with reference to the drawing, in which:
Figure 1 shows a manually method of prior art
Figure 2 shows a semi-automatic method of prior art
Figure 3 shows an automatic method of prior art
Figure 4 shows 6 lanes inclusive a divider and merger
Figure 5 shows an intelligent pin bone line - closed
Figure 6 shows an intelligent pin bone line- open
Figure 7 shows a scanner
Figure 8a-8c shows surface and bone scanning
Figure 9 shows a microwave unit
Figure 10 shows microwaves
Figure 11 shows the "Thermal mode" with depth impact shown as "sinus heat curves"
Figure 12 shows a laser
Figure 13 shows a laser beam from tool
Figure 14 shows the "Thermal mode" sinus heat curves
Figure 15 shows a pin bone removal unit
Figure 16a-16c shows a salmon fillet with bone structure
Figure 17a-17f shows rollers flexible in all directions to match fillet structure and extend picking/pulling window
Figure 18a-18c shows fillets running through with the roller going in both directions
Figure 19 shows an intelligent pin bone line- open, in open position where the means for easy cleaning is shown
Figure 20 shows a pre-rigor and fresh fish pin bone removal apparatus, in closed position
Figure 21 shows a pre-rigor and fresh fish pin bone removal apparatus comprising a microwave unit, in open position
Figure 22 shows a pre-rigor and fresh fish pin bone removal apparatus comprising a laser unit, in open position.

The figures shown illustrates salmon, however the invention can be handling other kinds of individual fish as well.

In the description of the figures, identical or corresponding elements will be designated by the same reference numerals in the various figures. Thus, there will not be given an explanation of all details in connection with each figure/embodiment.

In the drawing, the following reference numerals have been used for the designations used in the detailed part of the description:
- 1: Tool
- 2: Bone
- 3: Fish flesh
- 4: Handheld rotating shredded drum
- 5: Conveyor
- 6: Fish fillet
- 7: Automatic rotating drum
- 8: Pin bone removal apparatus
- 9: Direction of processing
- 10: Scanner
- 11: Temperature manipulation unit
- 12: Pin bone removal unit
- 13: Microwave unit
- 14: Laser unit
- 15: Cabinet
- 16: Hatch
- 17: Positioning unit
- 17a: 3D surface scan unit
- 18: Bone detection unit
- 18a: X-ray unit
- 18b: MR scanning unit
- 19: Microwave
- 20: Laser tool
- 21: Flex picker robot
- 22: Laser beam
- 23: Salmon
- 24: Backbone
- 25: Skin
- 26: Pull mechanism
- 27: Arm
- 28: Rotating drum
- 29: Linear movement, vertical
- 30: First rotating movement
- 31: First swivel
- 32: Second rotating movement
- 33: Second swivel
- 34: Automated inside cleaning cabinets
- 35: Spray bars
- 36: Sloped bottom section
- 37: Air, water, electricity connections
- 38: Water drain pipe
- 39: Lanes
- 40: Divider
- 41: Merger
- 42: Linear movement, horizontal length
- 43: Linear movement, horizontal width
- 44: Rotating movement

### Detailed Description of the Invention

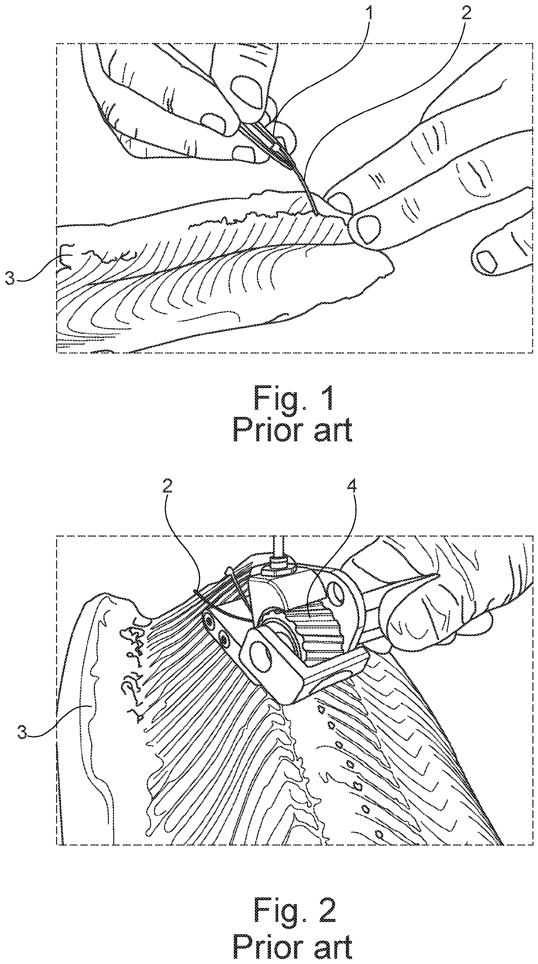

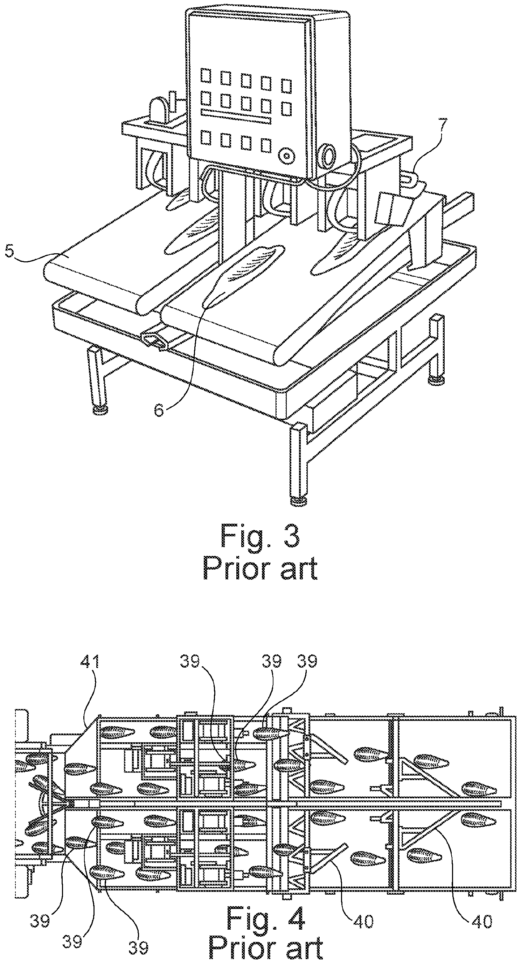

Figure 1 shows a manually method of prior art, where operators have small tools 1 to pick the bones 2 from the fish flesh 3. Figure 2 shows a semi-automatic method of prior art, where a handheld rotating shredded drum 4 is positioned to rip the pin bones 2 from the fish flesh 3. Figure 3 shows an automatic method of prior art, where a conveyor 5 takes the fish fillet 6 through one or more automatic rotating drums 7.

Figure 4 shows 6 lanes 39 inclusive divider 40 and merger 41.

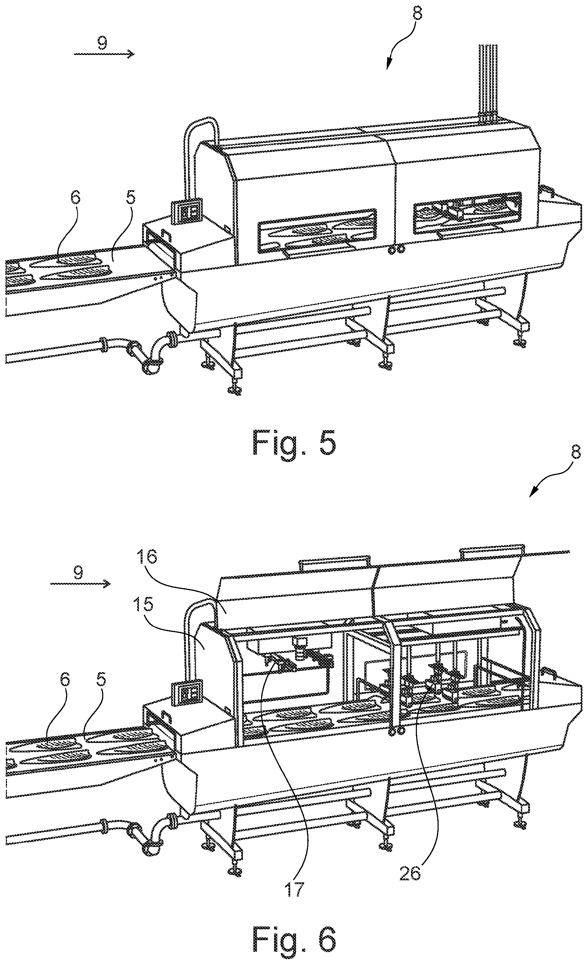

Figure 5 shows an intelligent pin bone removal apparatus 8 in closed position, where a conveyor 5 is transporting fish fillets 6 in the direction of processing 9.

Figure 6 shows an intelligent pin bone removal apparatus 8 in open position. The figure shows the position unit 17 as well as the pull mechanism 26. By open position is meant that the cabinet 15 has a hatch 16, a door or a similar device which can be opened and closed.

Figure 7 shows a scanner 10. Figure 8a shows a 3D surface scanning of a fish fillet conducted by a positioning unit 17 in terms of a 3D surface scan unit 17a; figure 8b shows a bone scanning conducted by a bone detection unit 18 either in terms of an x-ray unit 18a or a MR scanning unit 18b. Figure 8c shows a fish fillet 6 with pin bones 2.

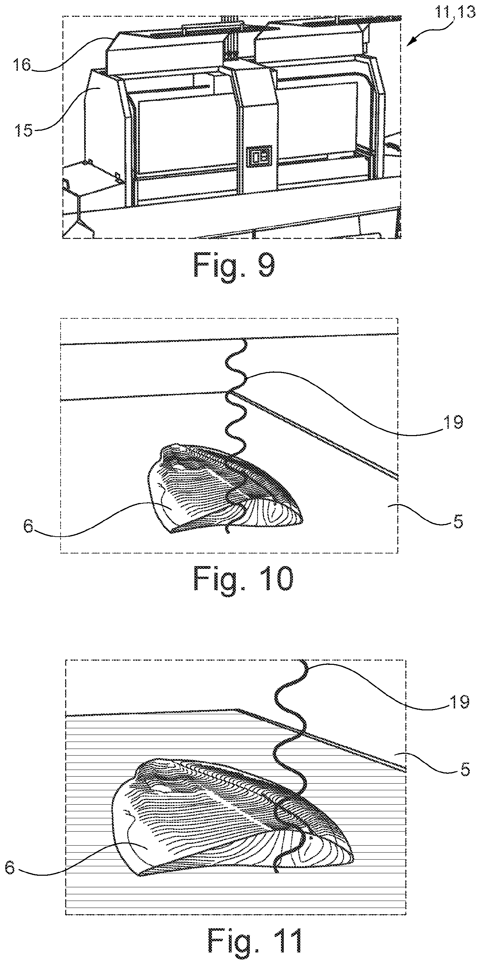

Figure 9 shows a microwave unit 13, in open position. Figure 10 shows microwaves 19 (just one wave is shown as a sinus heat curve for illustration) from the microwave unit 13 that hit the fish fillet 6 whereby the tendering process is then activated. This is done by manipulating the temperature, where especially the bones are fastened. Fat is more aqueous than flesh or meat, which means that the fat becomes warmer before the meat when exposed for microwaves. Since the bones are fastened to the fat which again is fastened to the skin the coherence becomes weaker and the bones becomes thus easier to pull without damaging the flesh of the fish. Figure 11 shows the "Thermal mode" with depth impact.

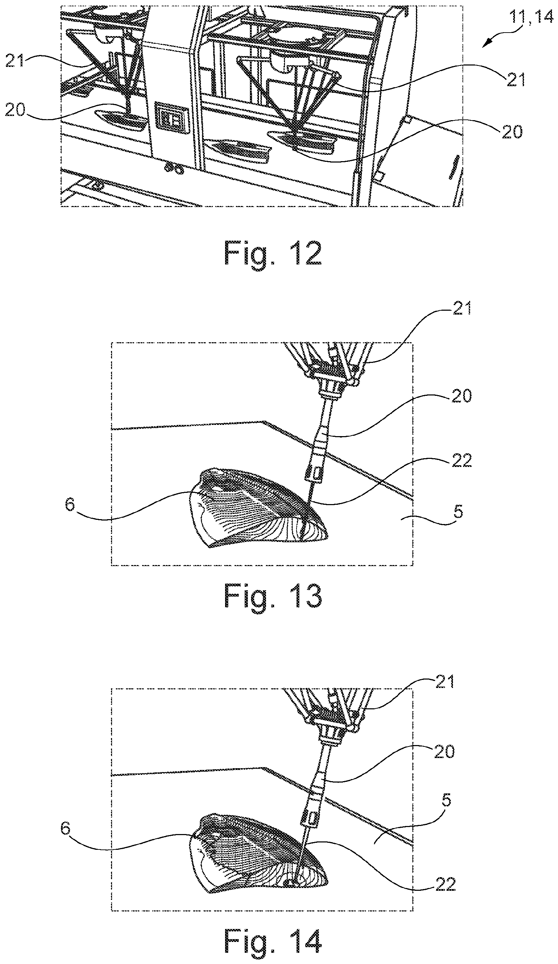

Figure 12 shows a laser unit 14, in open position where a laser tool 20 is mounted on a flex picker robot 21. Figure 13 shows a laser beam 22 from the laser unit 14, where the laser beam 22 hit the fish fillet 6 whereby the tendering process is then activated by manipulating the temperature, where especially the bones are fastened. With laser technology this can be done very precisely. Figure 14 shows the "Thermal mode".

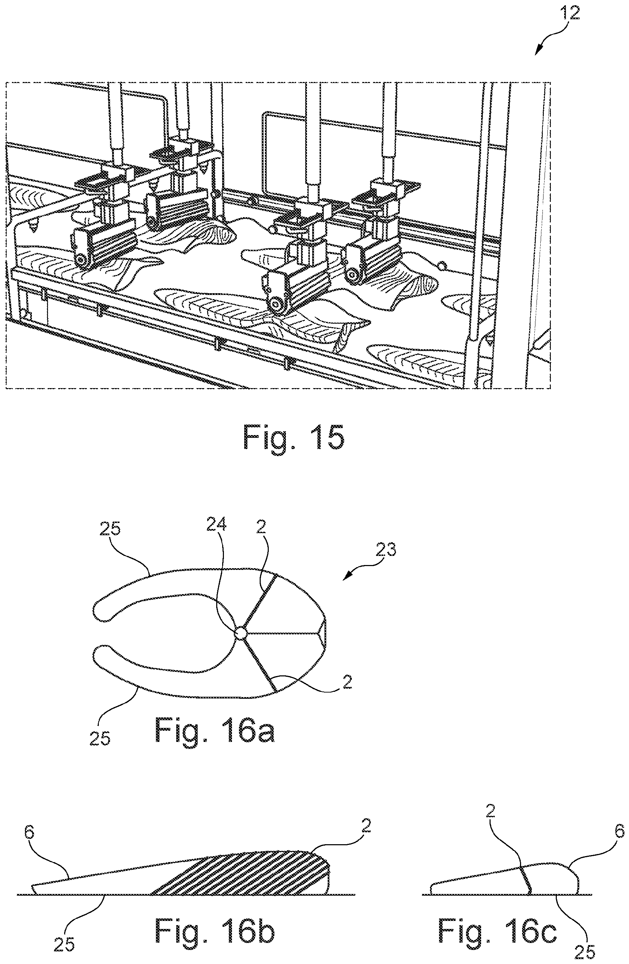

Figure 15 shows a pin bone removal unit 12 where four pull mechanism are arranged next to and in succession of each other, such that two and two are arranged next to each other and two and two in succession of each other.

Figure 16a shows a salmon 23 in cross section with its bone structure comprising backbone 24 and pin bones 2. Figure 16b shows a fillet 6 with pin bones 2 in the lengthwise direction of the fish fillet 6 and figure 16c shows a fillet 6 with pin bones 2 in a cross section of the fish fillet 6. The pin bones 2 are exposed from the backbone 24 after filleting but piece of cartilage fastens the pin bones 2 to the skin 25.

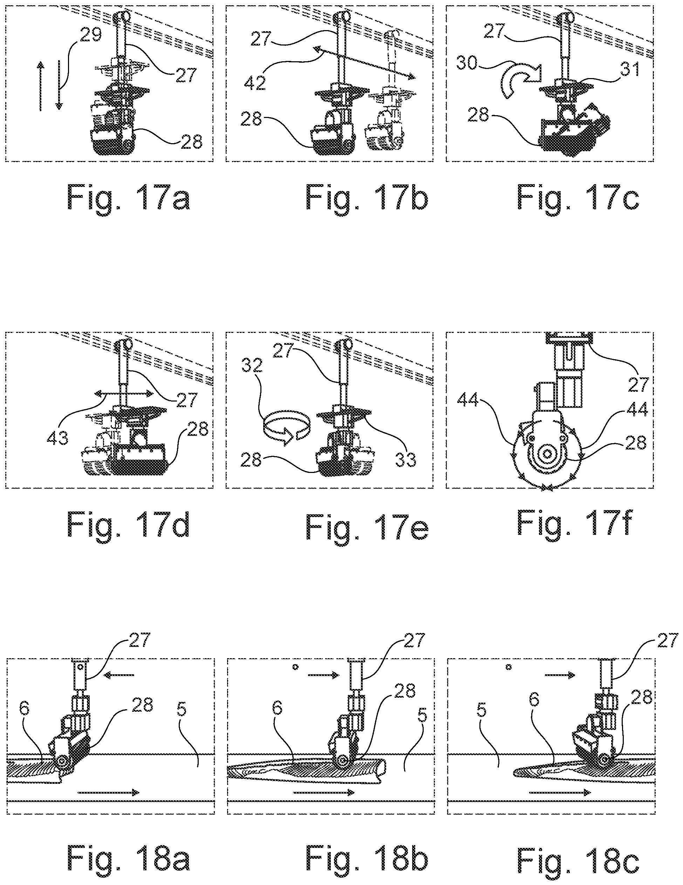

Figure 17a-f shows the flexibly positioning means of the pull mechanism 26 arranged on at least one arm 27 of the pin bone removal unit 12, which allows the pull mechanism 26 shown as a rotating drum 28 flexibly positioning means to optimize the picking angle. Figure 17a shows an example of a linear movement 29 of the arm 27 adjustable up and down in height (vertical), figure 17b an example of a front to end displacement as linear movement 42 in length (horizontal), figure 17c an example of a first rotating movement 30 adjustable in an angle around a first swivel 31 at the end of the arm 27, figure 17d an example of a side to side displacement as linear movement 43 in width (horizontal), figure 17e shows a second rotating movement 32 adjustable 360 degrees around a second swivel 33 at the end of the arm 27 where the axis of the second swivel 33 is parallel to the axis of the arm 27, figure 17f shows that rotating drums 28 are able to run in both directions, rotating movement 44 and with variable speed.

Figure 18a-c shows examples of fillets running through with the roller going in both directions (with the fillet and towards the fillet), so that the pull mechanism 26 matches the structure of the fillet 6. Figure 18a shows the conveyor 5 moving in one direction and where the arm 27 of the pull mechanism 26 is moving in the opposite direction from one end of the fillet 6, figure 18b shows the conveyor 5 moving in one direction and where the arm 27 of the pull mechanism 26 is moving in the same direction from one end of the fillet 6 and to the other end of the fillet 6 shown at figure 18c.

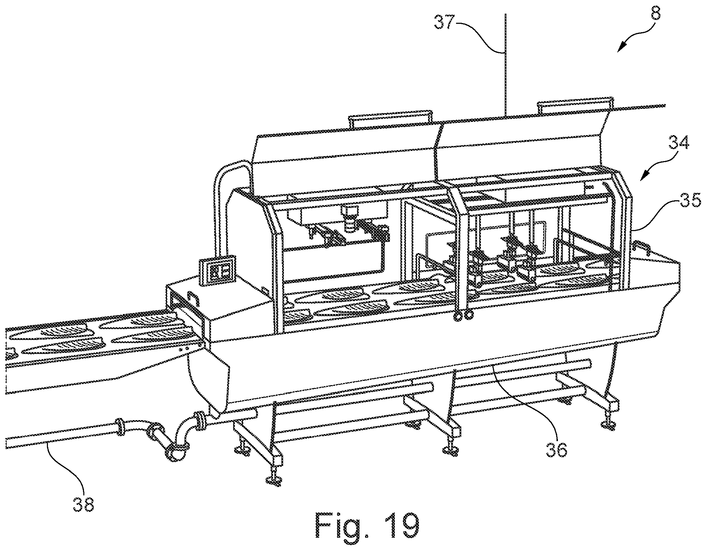

Figure 19 shows a pin bone removal apparatus 8, in open position where the means for easy cleaning is shown. This comprises automated inside cleaning cabinets 34 with moveable and/or fixed spray bars 35 as well as a sloped bottom section 36. Further are shown air, water and electricity connections 37 as well as the water drain pipe 38.

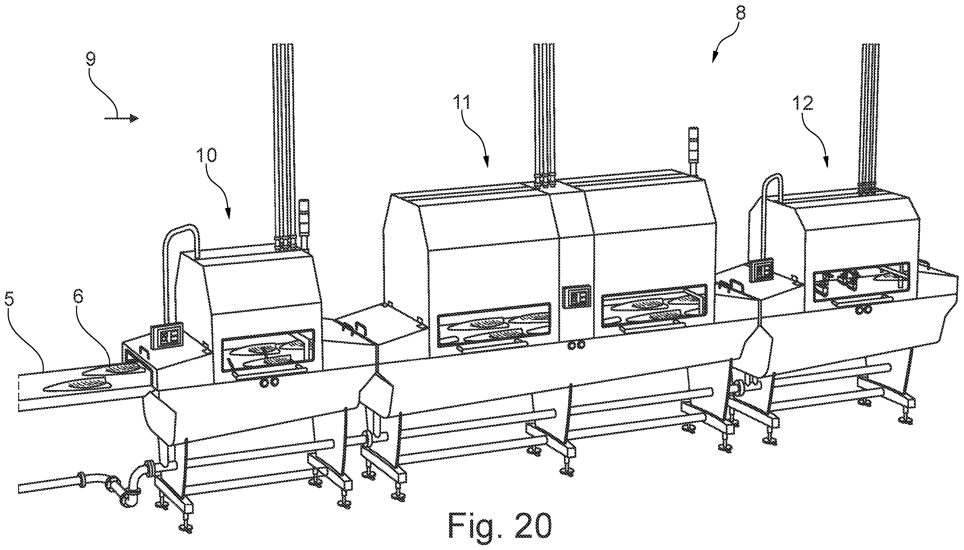

Figure 20 shows an example of how a pin bone removal apparatus 8 is turned into a pre-rigor and fresh fish pin bone removal apparatus. The figure shows the apparatus 8 in closed position, where a conveyor 5 is transporting fish fillets 6 in the direction of processing 9. In the shown embodiment is a temperature manipulation unit 11 placed in between a scanner 10 and a pin bone removal unit 12.

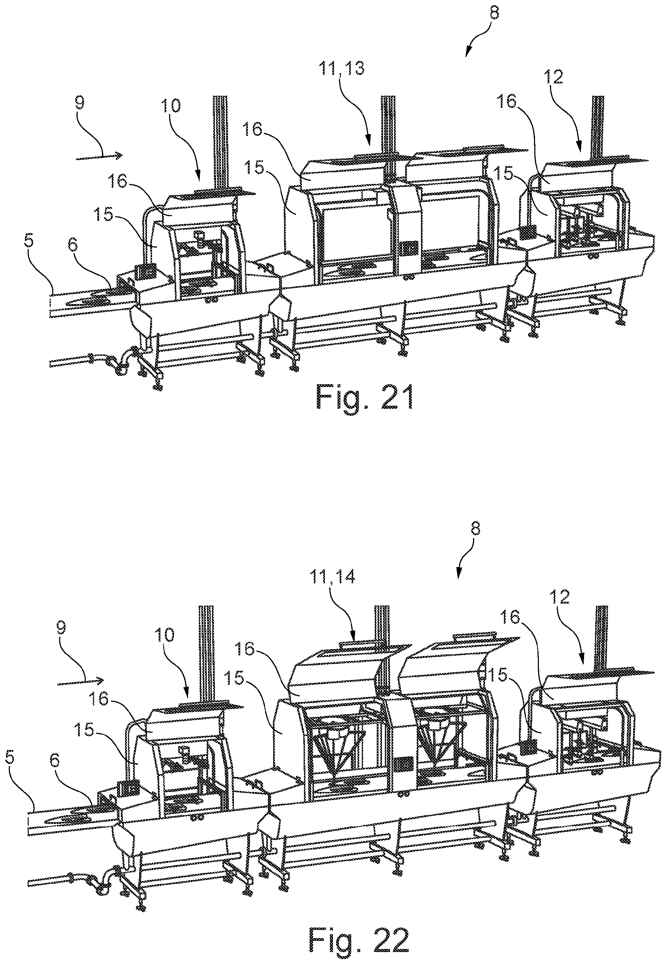

Figure 21 shows an example of how a pin bone removal apparatus 8 is turned into a pre-rigor and fresh fish pin bone removal apparatus. The figure shows the apparatus 8 in open position comprising a microwave unit 13.

Figure 22 shows an example of how a pin bone removal apparatus 8 is turned into a pre-rigor and fresh fish pin bone removal apparatus. The figure shows the apparatus 8 in open position comprising a laser unit 14, in open position. By open position is meant that the cabinet 15 has a hatch 16, a door or a similar device which can be opened and closed.

## Claims

1. Pin bone removal apparatus (8) for removing pin bones (2) in fillets (6) of fish flesh, the pin bone removal apparatus (8) comprising at least
a conveyor (5) for movement of the fillets (6) forward in a flow, including controllable steps or forward continuous movement, where the fillets are in motion at both the controllable steps or the forward continuous movement, and
a pin bone removal unit (12) comprising at least two flexible pull mechanisms (26), the at least two flexible pull mechanisms (26) each comprising a rotating drum (28) arranged on an arm (27), where the arm (27) has a number of flexibly positioning means (29, 30, 31, 32, 33, 42, 43), which can react to the individual fillets (6) in motion, including a linear horizontal movement means (42) for horizontal positioning of the rotating drums (28), wherein
before the pin bone removal unit (12), the pin bone removal apparatus (8) further comprises at least one scanner (10) for measuring the individual fillets (6) to adjust the rotating drums (28) to the individual fillets (6),
- wherein the at least one scanner (10) comprises at least a positioning unit (17) and a bone detection unit (18),
- wherein the at least two flexible pull mechanisms (26) are arranged next to and/or in succession of each other, which can react to the individual fillets (6) in motion,
- wherein the flexibly positioning means of each arm (27) include a linear vertical movement means (29) for vertical positioning of the rotating drum (28), which can react to the individual fillets (6) in motion,
- wherein the rotating drums (28) have flexible positioning means different from the flexibly positioning means of the arm (27), and
- wherein the flexible positioning means of the rotating drums (28) and the flexibly positioning means of the arm (27) can adjust the position of the rotating drums (28) relative to the individual fillets (6) in motion.

2. Pin bone removal apparatus according to claim 1, wherein the at least two flexible pull mechanisms (26) are arranged in succession of each other.

3. Pin bone removal apparatus according to any of the claims 1 or 2, wherein the positioning unit (17) is a 3D surface scan unit (17a) and that the bone detection unit (18) is an x-ray unit (18a).

4. Pin bone removal apparatus according to any of the claims 1 or 2, wherein the positioning unit (17) is a 3D surface scan unit (17a) and that the bone detection unit (18) is a MR- scanning unit (18b).

5. Pin bone removal apparatus according to any of the claims 1 to 4, wherein the pin bone removal unit (8) further comprises at least one temperature manipulation unit (11) configured to conduct a controlled heating of at least one selective area of the fish fillet's (6) flesh and where the controlled temperature manipulation unit (11) comprises either a microwave unit (19), an infrared unit or a laser unit (14).

6. Pin bone removal apparatus according to claim 5, wherein at least the laser unit (14) further comprises a laser tool (20) arranged at a robotic arm (21).

7. Pin bone removal apparatus according to any of the claims 1 to 6, wherein the pin bone removal apparatus (8) comprises a cabinet (15, 34) with self-cleaning means.

8. Pin bone removal apparatus according to claim 7, wherein the automated inside cleaning cabinets (15, 34) comprises moveable and/or fixed spray bars (35).

9. Pin bone removal apparatus according to any of the claims 7 to 8, wherein the automated inside cleaning cabinets (15, 34) further comprises a sloped bottom section (36).

10. Pin bone removal apparatus according to any of the claims 1 to 9, wherein the flexible positioning means of the rotating drums (28) different from the flexibly positioning means of the arm (27) is at least one of the following flexible positioning means: means (31) being adjustable in vertical angle, means (33) being adjustable in 360 degrees or means (44) able to run with variable speed in both directions around the drum rotation centre.

11. Use of a pin bone removal apparatus according to any of the preceding claims 1-10, for removing pin bones in fillets (6) of salmon.

## Patentansprüche

1. Grätenentfernungseinrichtung (8) zum Entfernen von Gräten (2) in Filets (6) aus Fischfleisch, wobei die Grätenentfernungseinrichtung (8) mindestens Folgendes umfasst
einen Förderer (5) zur Vorwärtsbewegung der Filets (6) in einem Ablauf, der steuerbare Schritte oder kontinuierliche Vorwärtsbewegung beinhaltet, wobei die Filets sowohl in den steuerbaren Schritten als auch in der kontinuierlichen Vorwärtsbewegung in Bewegung sind, und
eine Grätenentfernungseinheit (12), die mindestens zwei flexible Zugmechanismen (26) umfasst, wobei die mindestens zwei flexiblen Zugmechanismen (26) jeweils eine rotierende Trommel (28) umfassen, die an einem Arm (27) angeordnet ist, wobei der Arm (27) mehrere flexible Positionierungsmittel (29, 30, 31, 32, 33, 42, 43) aufweist, die auf die einzelnen Filets (6) in Bewegung reagieren können, beinhaltend ein lineares horizontales Bewegungsmittel (42) zur horizontalen Positionierung der rotierenden Trommeln (28), wobei
vor der Grätenentfernungseinheit (12) die Grätenentfernungseinrichtung (8) weiter mindestens einen Scanner (10) zum Vermessen der einzelnen Filets (6) umfasst, um die rotierenden Trommeln (28) auf die einzelnen Filets (6) einzustellen,
- wobei der mindestens eine Scanner (10) mindestens eine Positionierungseinheit (17) und eine Grätendetektionseinheit (18) umfasst,
- wobei die mindestens zwei flexiblen Zugmechanismen (26) nebeneinander und/oder hintereinander angeordnet sind, die auf die einzelnen Filets (6) in Bewegung reagieren können,
- wobei die flexiblen Positionierungsmittel jedes Arms (27) ein lineares vertikales Bewegungsmittel (29) zur vertikalen Positionierung der rotierenden Trommel (28) beinhalten, das auf die einzelnen Filets (6) in Bewegung reagieren kann,
- wobei die rotierenden Trommeln (28) flexible Positionierungsmittel aufweisen, die sich von den flexiblen Positionierungsmitteln des Arms (27) unterscheiden, und
- wobei die flexiblen Positionierungsmittel der rotierenden Trommeln (28) und die flexiblen Positionierungsmittel des Arms (27) die Position der rotierenden Trommeln (28) relativ zu den einzelnen Filets (6) in Bewegung einstellen können.

2. Grätenentfernungseinrichtung nach Anspruch 1, wobei die mindestens zwei flexiblen Zugmechanismen (26) hintereinander angeordnet sind.

3. Grätenentfernungseinrichtung nach einem der Ansprüche 1 oder 2, wobei die Positionierungseinheit (17) eine 3D-Oberflächenscaneinheit (17a) ist und die Grätendetektionseinheit (18) eine Röntgeneinheit (18a) ist.

4. Grätenentfernungseinrichtung nach einem der Ansprüche 1 oder 2, wobei die Positionierungseinheit (17) eine 3D-Oberflächenscaneinheit (17a) ist und die Grätendetektionseinheit (18) eine MR-Scaneinheit (18b) ist.

5. Grätenentfernungseinrichtung nach einem der Ansprüche 1 bis 4, wobei die Grätenentfernungseinheit (8) weiter mindestens eine Temperaturmanipulationseinheit (11) umfasst, die so konfiguriert ist, dass sie ein gesteuertes Erwärmen mindestens eines ausgewählten Bereichs des Fleischs vom Fischfilet (6) durchführt, und wobei die gesteuerte Temperaturmanipulationseinheit (11) entweder eine Mikrowelleneinheit (19), eine Infraroteinheit oder eine Lasereinheit (14) umfasst.

6. Grätenentfernungseinrichtung nach Anspruch 5, wobei mindestens die Lasereinheit (14) weiter ein Laserwerkzeug (20) umfasst, das an einem Roboterarm (21) angeordnet ist.

7. Grätenentfernungseinrichtung nach einem der Ansprüche 1 bis 6, wobei die Grätenentfernungseinrichtung (8) einen Schrank (15, 34) mit Selbstreinigungsmitteln umfasst.

8. Grätenentfernungseinrichtung nach Anspruch 7, wobei die automatischen Innenreinigungsschränke (15, 34) bewegliche und/oder feste Sprühstangen (35) umfassen.

9. Grätenentfernungseinrichtung nach einem der Ansprüche 7 bis 8, wobei die automatischen Innenreinigungsschränke (15, 34) weiter einen geneigten Bodenabschnitt (36) umfassen.

10. Grätenentfernungseinrichtung nach einem der Ansprüche 1 bis 9, wobei die flexiblen Positionierungsmittel der rotierenden Trommeln (28), die sich von den flexiblen Positionierungsmitteln des Arms (27) unterscheiden, mindestens eine der folgenden flexiblen Positionierungsmittel sind: Mittel (31), die im vertikalen Winkel verstellbar sind, Mittel (33), die um 360 Grad verstellbar sind, oder Mittel (44), die in der Lage sind, mit variabler Geschwindigkeit in beide Richtungen um den Trommelrotationsmittelpunkt zu laufen.

11. Verwendung einer Grätenentfernungseinrichtung nach einem der vorstehenden Ansprüche 1-10 zum Entfernen von Gräten in Lachsfilets (6).

## Revendications

1. Appareil de retrait d'arêtes (8) pour retirer des arêtes (2) dans des filets (6) de chair de poisson, l'appareil de retrait d'arêtes (8) comprenant au moins
un convoyeur (5) pour un déplacement des filets (6) vers l'avant en un flux, incluant des étapes pouvant être commandées ou un déplacement continu vers l'avant, les filets étant en mouvement à la fois lors des étapes pouvant être commandées ou lors du déplacement continu vers l'avant, et
une unité de retrait d'arêtes (12) comprenant au moins deux mécanismes de traction flexibles (26), les au moins deux mécanismes de traction flexibles (26) comprenant chacun un tambour rotatif (28) agencé sur un bras (27), le bras (27) présentant un certain nombre de moyens de positionnement flexibles (29, 30, 31, 32, 33, 42, 43), qui peuvent réagir aux filets individuels (6) en mouvement, notamment des moyens de déplacement horizontal linéaire (42) pour un positionnement horizontal des tambours rotatifs (28), dans lequel
avant l'unité de retrait d'arêtes (12), l'appareil de retrait d'arêtes (8) comprend en outre au moins un scanner (10) pour mesurer les filets individuels (6) afin d'ajuster les tambours rotatifs (28) aux filets individuels (6),
- dans lequel le au moins un scanner (10) comprend au moins une unité de positionnement (17) et une unité de détection d'arêtes (18),
- dans lequel les au moins deux mécanismes de traction flexibles (26) sont agencés l'un à côté de l'autre et/ou l'un à la suite de l'autre, pouvant réagir aux filets individuels (6) en mouvement,
- dans lequel les moyens de positionnement flexible de chaque bras (27) incluent des moyens de déplacement vertical linéaire (29) pour un positionnement vertical du tambour rotatif (28), qui peut réagir aux filets individuels (6) en mouvement,
- dans lequel les tambours rotatifs (28) présentent des moyens de positionnement flexibles différents des moyens de positionnement flexibles du bras (27), et
- dans lequel les moyens de positionnement flexibles des tambours rotatifs (28) et les moyens de positionnement flexibles du bras (27) peuvent ajuster la position des tambours rotatifs (28) par rapport aux filets individuels (6) en mouvement.

2. Appareil de retrait d'arêtes selon la revendication 1, dans lequel les au moins deux mécanismes de traction flexibles (26) sont agencés l'un à la suite de l'autre.

3. Appareil de retrait d'arêtes selon l'une quelconque des revendications 1 ou 2, dans lequel l'unité de positionnement (17) est une unité de balayage de surface 3D (17a) et en ce que l'unité de détection d'arêtes (18) est une unité à rayons X (18a).

4. Appareil de retrait d'arêtes selon l'une quelconque des revendications 1 ou 2, dans lequel l'unité de positionnement (17) est une unité de balayage de surface 3D (17a) et en ce que l'unité de détection d'arêtes (18) est une unité de balayage MR (18b).

5. Appareil de retrait d'arêtes selon l'une quelconque des revendications 1 à 4, dans lequel l'unité de retrait d'arêtes (8) comprend en outre au moins une unité de manipulation de température (11) configurée pour effectuer un chauffage commandé d'au moins une zone sélective de la chair d'un filet de poisson (6) et dans lequel l'unité de manipulation à température commandée (11) comprend une unité à micro-ondes (19), une unité à infrarouge ou une unité à laser (14).

6. Appareil de retrait d'arêtes selon la revendication 5, dans lequel au moins l'unité à laser (14) comprend en outre un outil à laser (20) agencé au niveau d'un bras robotique (21).

7. Appareil de retrait d'arêtes selon l'une quelconque des revendications 1 à 6, dans lequel l'appareil de retrait d'arêtes (8) comprend une armoire (15, 34) avec des moyens d'auto-nettoyage.

8. Appareil de retrait d'arêtes selon la revendication 7, dans lequel les armoires de nettoyage intérieur automatisé (15, 34) comprennent des barres de pulvérisation mobiles et/ou fixes (35).

9. Appareil de retrait d'arêtes selon l'une quelconque des revendications 7 à 8, dans lequel les armoires de nettoyage intérieur automatisé (15, 34) comprennent en outre une section de fond inclinée (36).

10. Appareil de retrait d'arêtes selon l'une quelconque des revendications 1 à 9, dans lequel les moyens de positionnement flexibles des tambours rotatifs (28) différents des moyens de positionnement flexibles du bras (27) sont au moins certains des moyens de positionnement flexibles suivants : des moyens (31) ajustables en terme d'angle vertical, des moyens (33) ajustables sur 360 degrés ou des moyens (44) pouvant tourner à vitesse variable dans les deux sens autour du centre de rotation du tambour.

11. Utilisation d'un appareil de retrait d'arêtes selon l'une quelconque des revendications précédentes 1 à 10, pour enlever des arêtes dans des filets (6) de saumon.
